# EUROPEAN PATENT APPLICATION

(11) **EP 2 592 564 A1**
(43) Date of publication of application: **15.05.2013**
(21) Application number: 11803523.7
(22) Date of filing: 01.07.2011
(51) Int. Cl.: G06F 17/21, G06F 17/30

(54) **SERVICE PROVISION DEVICE FOR ELECTRONIC DOCUMENTS, SERVICE PROVISION METHOD FOR ELECTRONIC DOCUMENTS, AND SERVICE PROVISION TERMINAL FOR ELECTRONIC DOCUMENTS**

(30) Priority: 05.07.2010 JP 2010152917
(71) Applicant: NEC Corporation, Tokyo 108-8001 (JP)
(72) Inventor: MURAKI Kazunori, Tokyo 108-8001 (JP)
(74) Representative: Betten & Resch
(86) International application number: PCT/JP2011/065194
(87) International publication number: WO 2012/005189

(57) **Abstract**

There is provided an added value by electronically supporting an interaction between a person and a book when an electronic book is browsed and further executing digitization.

A server device gives an identifier to each of digitized electronic pages of an electronic book composed of the electronic pages and manages the electronic book as an original electronic book. An optional number of electronic sub-pages that are pages corresponding to electronic pages is created, an auxiliary identifier is given to each of the electronic sub-pages, and an electronic personal sub-book composed of the electronic pages is created and managed for each of users. The page identifier and the auxiliary identifier are managed by being caused to correspond to each other. A terminal device having a touch screen receives an operation from a user and adds data according to the operation of the user to the electronic sub-pages as interaction data. The original electronic book and the electronic personal sub-book are displayed on a touch screen in response to a request received from the user.

## Description

### {Technical Field}

The invention relates to a provision of a service for an electronic document represented by an electronic book.

### {Background Art}

Recently, a reading terminal for browsing an digitized book (hereinafter, appropriately called "electronic book") has been becoming widespread among general public. The reading terminal is called, for example, an e-reader. Then, a style for browsing an electronic book by the e-reader is spreading, and even a textbook and a specialized book are made to an electronic book so as to be learned via the e-reader and the like. As the reading terminal has become widespread, various technologies relating to the reading terminal have been developed. For example, Patent Literature 1 describes a technology for displaying contents without changing a layout.

### {Citation List}

### {Patent Literature}

{PTL1} JP-A-2008-135024

### {Summary of Invention}

### {Technical Problem}

As described above, an electronic book has been ordinarily browsed using the reading terminal and the like. However, when an electronic book is compared with a book presented by a paper medium, the following problems exist.

An action for making learning by a book such as a textbook and a specialized book is a personal intellectual action. An individual executes writing and putting of a bookmark to the book to assimilate the contents of the book to the knowledge and insight of the individual. A specific action includes, for example, drawing an underline to an important portion, writing an essential point on a paper book, directly writing an exercise of calculation on a book, and putting a mark of a query portion on a paper. Further, a putting action is executed to put a bookmark to a point which has been understood with effort and seems important and to put reference materials distributed in a classroom or found by oneself and a question sheet to which a replay has been made to a page of a book which describes the contents of the reply. The contents of a book are enriched via the writing action and putting action as if the book is a mirror for recording how a one's brain is grown.

In this point, a method of presenting an added value obtained by electronically supporting an interaction between a human and a book is required to an electronic book.

However, a current electronic book reading application cannot realize the style of reading and self-learning described above without stress. For example, although it is possible to put an ink on a displayed page using a key board (hereinafter, appropriately called "KB ") and a pen depending on a reading terminal, a page size of a space of the same page on which writing is executed with an ink of a pen and the like is restricted. Accordingly, in a case in which a memo and an amount of the memo are stored and increased each time the same page is repeatedly read, an inconvenience occurs in that writing cannot be executed easily due to an occurrence of a troublesome job of erasing a portion written before, and the like. A function for newly capturing and putting an external paper is not provided. Further, any of current electronic book reading applications cannot be presented so as to maximize a positive effect resulting from digitization.

That is, in an electronic book, there is no means for a reader to create and practically use a book property which is personally grown by various interaction with a book caused by reading using a page and a structure of a book as a record and a memo of an evidence of understanding of the contents of the electronic book by putting a bookmark and different paper data. Further, there is an electronic book which prepares a transparent virtual electronic page overlapped on an original electronic page and reflects an inking interaction to the transparent virtual electronic page to remain a writing interaction to a paper page in the electronic book. However, there cannot be presented a simple method of rescuing the electronic book from a problem that a degree of freedom of writing is not available because a writing space is restricted by a size of the virtual electronic page, a recognition property is deteriorated due to excessive writing, and the like.

On the other hand, although it is considered that an one's own notebook created by copying a blackboard of a classroom is also regarded as an one's own book which is grown as a pair with a book which is grown by an interaction with the above book, the notebook is not completed by itself. To practically use the one's own notebook thereafter, it is necessary to arrange and store the one's own notebook by linking it to a textbook as its original source so that an original paper and the one's own notebook corresponding to the original paper can be used again at the same time.

In an environment of an electronic book reader, since an original paper page cannot be captured and the original paper page cannot be linked to the one's own notebook, a learning record by a book cannot be completed only by an electronic book. In addition to the above-mentioned, there is troublesomeness of treatment such as a danger of dissipating data and using an electronic book together with an external paper notebook or a separate scanned file.

Further, it can be realized by using an application of an electronic terminal such as a personal computer and the like to scan a paper notebook and to capture the scanned paper notebook to the terminal. Even when the paper notebook is captured, however, since the paper notebook remains without being linked to an electronic page to which the contents of the paper notebook directly correspond and relate, it is very troublesome to search an inserted paper from the contents of the paper notebook stored as a separate file.

A personal learning property has been fixed and made visible in a manner of an individual person and personally managed as a property which is visible and can be remembered again so that the individual person can be efficiently rescued from indispensable oblivion of learning. On a paper, however, an amount of writing capable of being executed thereon is restricted and, various inserted data increases a thickness of a book, with a result that dissipation of the inserted data cannot be avoided. Further, it is difficult to review a notebook owned as a separate pair unless a link of the notebook to a relevant book page is separately created and managed as an intellectual property, and any one does not execute a management for reusing the notebook due to troublesomeness of management of a paper book and paper data.

In addition to the above-mentioned, recently, there is presented a new learning method in a network environment of a cooperative learning and the like. Specifically, there is proposed a scheme for enclosing learners by a community infrastructure such as SNS (Social Network Service) and Blog, writing a question, an explanation, a reply, and a common subject on a shared electronic whiteboard, and executing a cooperative learning. However, in an aspect in which learning is guided in a well-designed order using a textbook and a specialized book similar to the text book, since a question has contents relating to details of a relevant page, although the cooperative learning is useful when God's message is given to the portion of the question timely, an effective and practically applicable method of the cooperative learning is yet not found. At present, there is presented a mechanism for posting a question to a writing board of a cooperative learning community and a mechanism for directly sending a question to a particular person (or persons) by mail. It is true that there is an adverse effect that an object is interfered by a manual job, which is away from a personal learning of a book and personal reading of a book for understanding, for taking a procedure for checking by oneself whether or not a reply to the question is written, and there is also an adverse effect that a personal job of a person who is designated to reply a question by mail is interfered.

Further, it is preferable to easily find that who has proceeded to read a book up to which portion and that in which portion he or she is encountered with a difficulty in order to input information having a merit that cannot be found in an original electronic book and to efficiently execute a teacher's action corresponding to God's message. However, there is a problem in that an effective method for the purpose has not been established.

Further, since an incentive for a cooperative learner to achieve a role for supporting reading of other person is not prepared, various contents are input to a so-called shared whiteboard by many persons at the same time. Accordingly, there is a problem in that stress other than learning is generated because necessary contents must be searched by excluding unnecessary contents from the various contents and thus a main function of the cooperative learning whiteboard does not work.

Further, when an examination is made from a viewpoint of a protection of a copyright writer's right of an electronic book, a risk of theft and illegal redistribution is increased in a configuration in which an entire electronic book is downloaded to a terminal. In contrast, in a streaming in which only a necessary page of an electronic book is downloaded (DL) from a remote center each time the download is requested (in a unit of page), a problem arises in measures for guaranteeing a quick response when accesses are concentrated by many persons even in a network environment and in that an electronic book cannot be used in an environment in which a connection to the network becomes impossible.

Accordingly, an object of the invention is to present a service provision system for electronic documents, a service provision method for electronic documents, and a service provision terminal for electronic documents, which can present an added value by electronically supporting an interaction between a human and a book when an electronic book is browsed and further executing digitization.

### {Solution to Problem}

According to a first aspect of the present invention, there is provided a service provision system for electronic documents that includes a terminal device including a display unit and a server device mutually communicating with the terminal device, wherein the server device includes:
an electronic page management unit for giving a page identifier to each of digitized electronic pages of an electronic book including the electronic pages and managing the electronic book as an original electronic book;
a sub-page management unit for creating an optional number of electronic sub-pages that are pages corresponding to the electronic pages, giving an auxiliary identifier to each of the electronic sub-pages, and creating and managing an electronic personal sub-book including the electronic sub-pages for each of users who have created the electronic sub-pages; and
an electronic book management unit for managing the page identifier and the auxiliary identifier by causing the page identifier to correspond to the auxiliary identifier, and the terminal device includes:
   a book terminal operation unit for receiving an operation from the user and adding data according to the operation of the user to the electronic sub-page as interaction data; wherein
   the terminal device displays on the display unit the original electronic book and the electronic personal sub-book in response to a request of a user received by the book terminal operation unit.

According to a second aspect of the present invention, there is provided a service provision terminal device for electronic documents that includes a display unit includes:
an electronic page management unit for giving a page identifier to each of digitized electronic pages of an electronic book including the electronic pages and managing the electronic book as an original electronic book;
a sub-page management unit for creating an optional number of electronic sub-pages that are pages corresponding to the electronic pages, giving an auxiliary identifier to each of the electronic sub-pages, and creating and managing an electronic personal sub-book including the electronic sub-pages for each of users who have created the electronic sub-pages;
an electronic book management unit for managing the page identifier and the auxiliary identifier by causing the page identifier to correspond to the auxiliary identifier; and a book terminal operation unit for receiving an operation from the user and adding data according to the operation of the user to the electronic sub-page as interaction data, wherein
the original electronic book and the electronic personal sub-book are displayed on the display unit in response to a request of a user received by the book terminal operation unit.

According to a third aspect of the present invention, there is provided a service provision method for electronic documents, the method is executed by a system that includes a terminal device including a display unit and a server device mutually communicating with the terminal device, wherein
the server device gives a page identifier to each of digitized electronic pages of an electronic book including the electronic pages and manages the electronic book as an original electronic book;
the server device creates an optional number of electronic sub-pages that are pages corresponding to the electronic pages, gives an auxiliary identifier to each of the electronic sub-pages, and creates and manages an electronic personal sub-book including the electronic sub-pages for each of users who have created the electronic sub-pages;
the server device manages the page identifier and the auxiliary identifier by causing the page identifier to correspond to the auxiliary identifier;
the terminal device receives an operation from the user and adds data according to the operation of the user to the electronic sub-page as interaction data; and the terminal device displays on the display unit the original electronic book and the electronic personal sub-book in response to the request received from the user.

### {Advantages Effects of the Invention}

According to the invention, since an optional number of virtual memo pages is created to a target page of an electronic book and the created virtual memo pages and the target page can be used by being linked to each other, it is possible to present an added value by electronically supporting an interaction between a human and a book and further executing digitization.

### {Brief Description of Drawings}

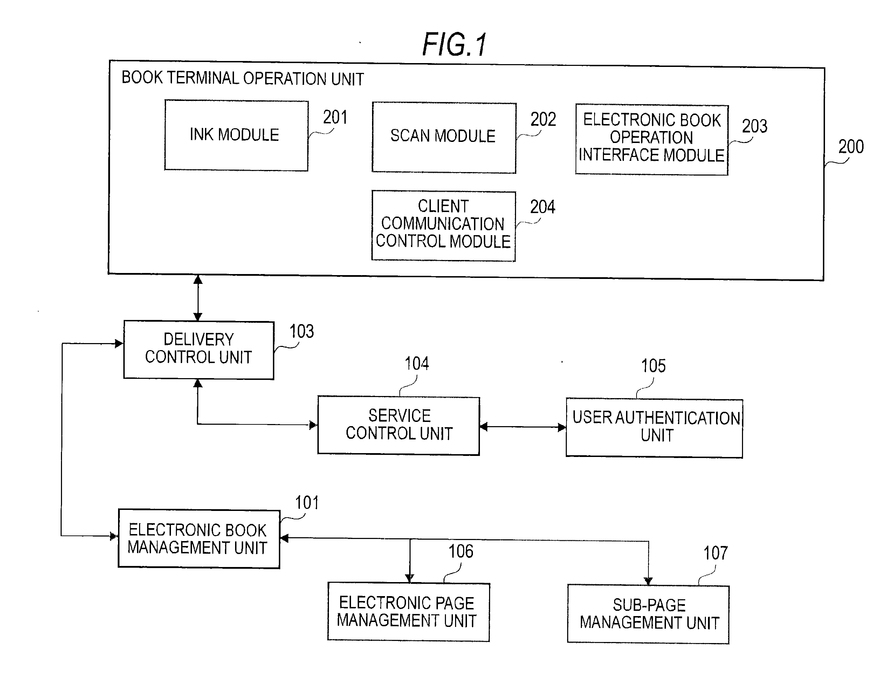

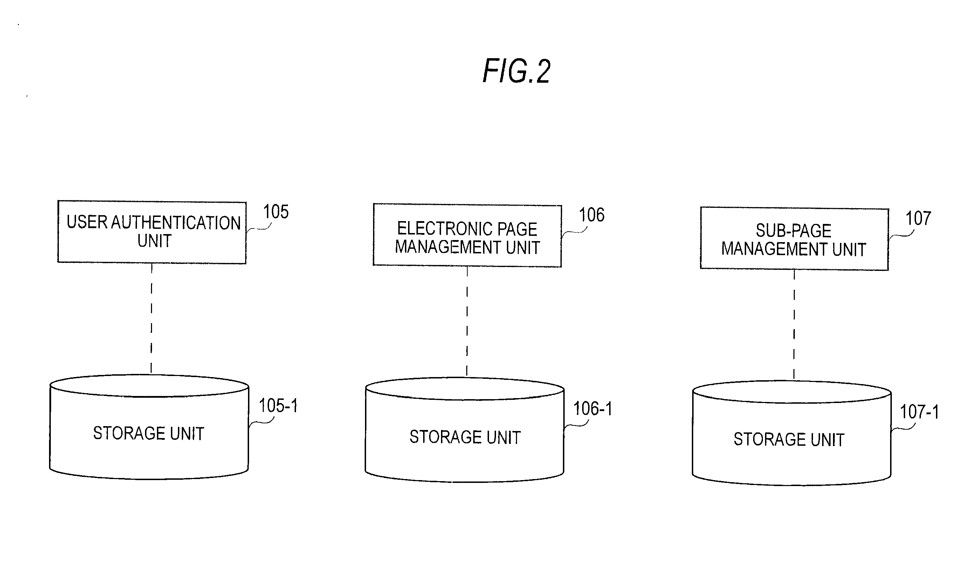

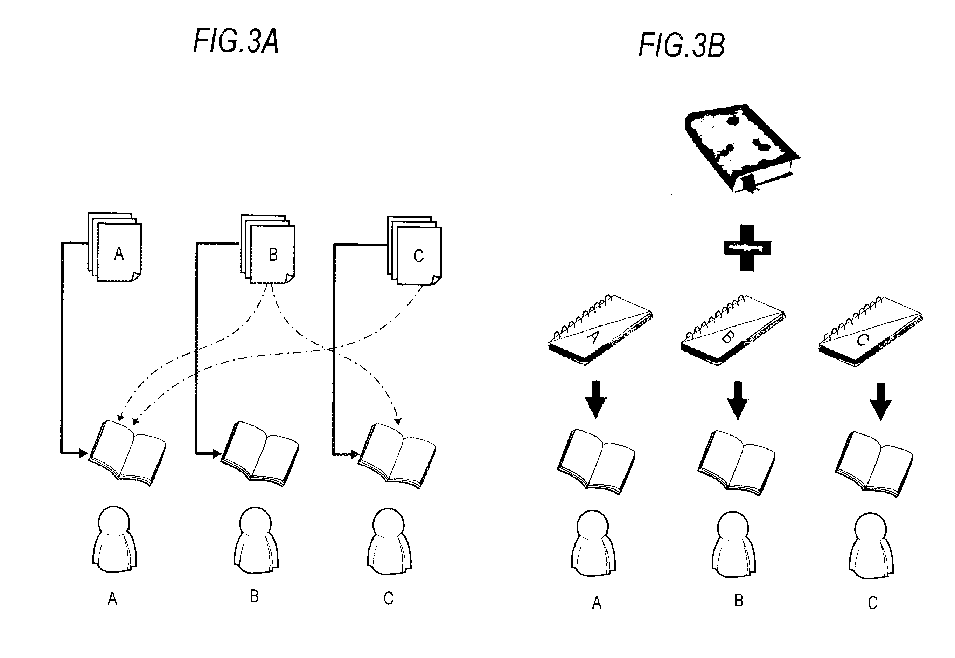

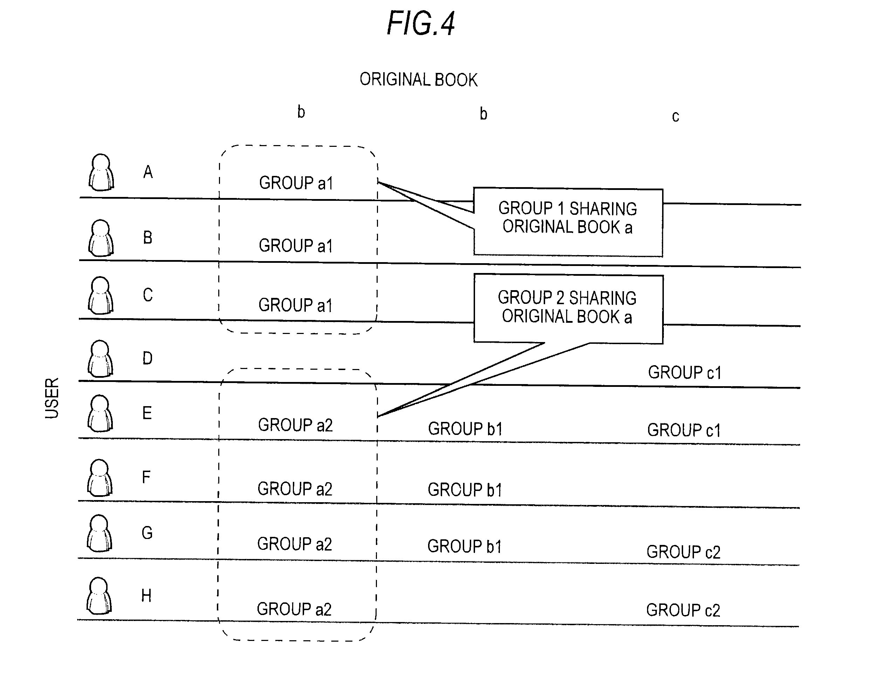

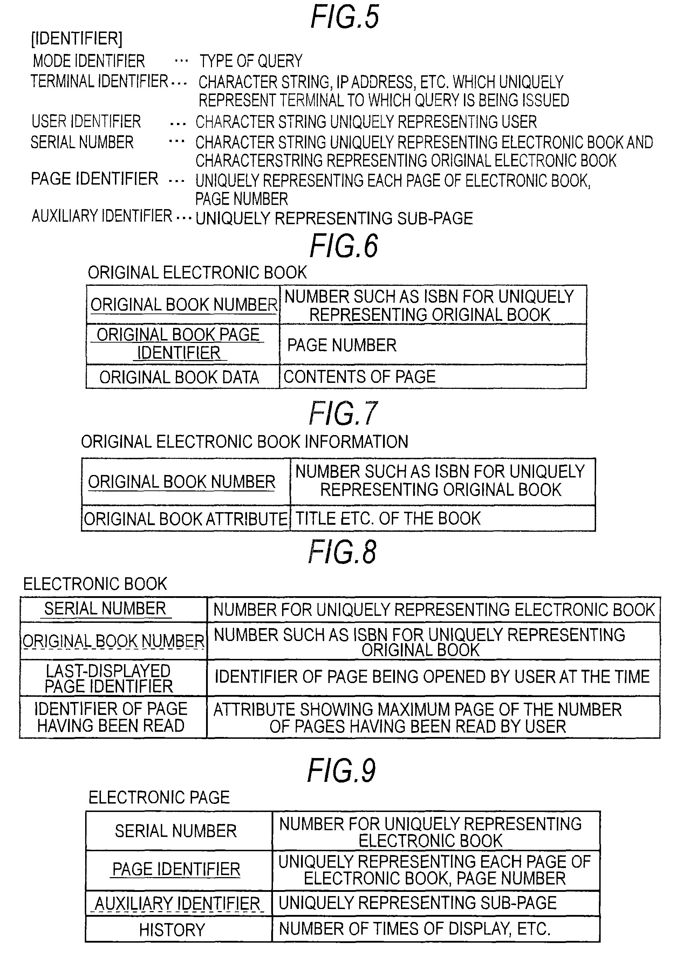

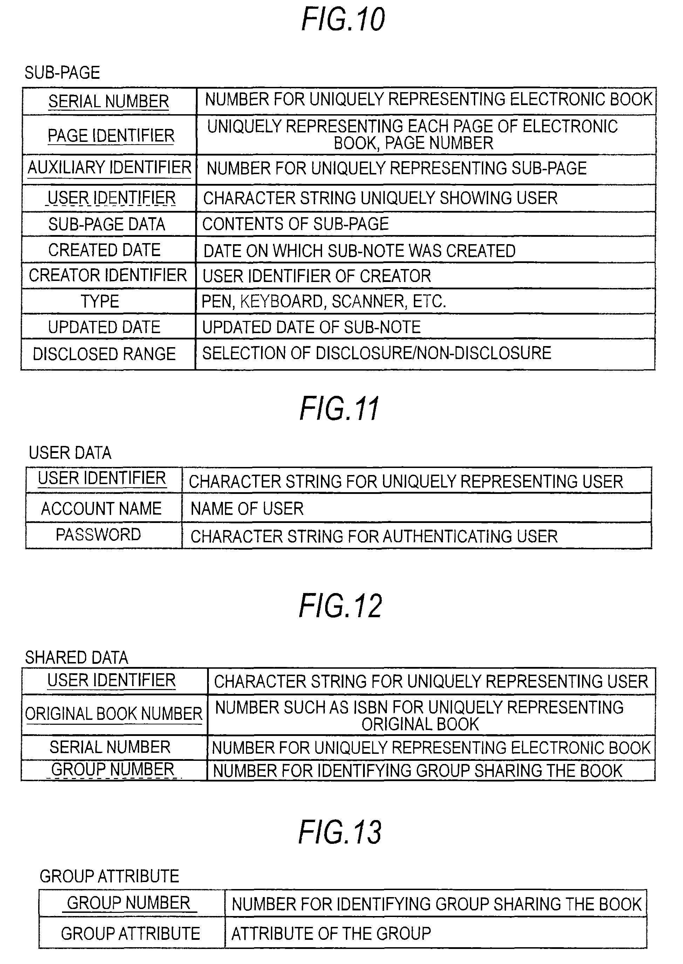

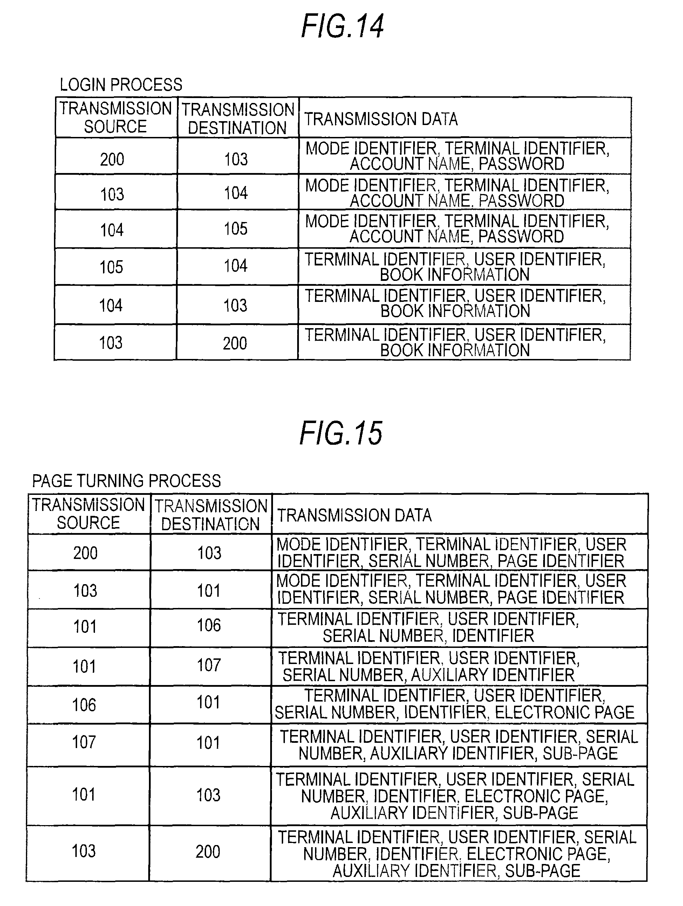

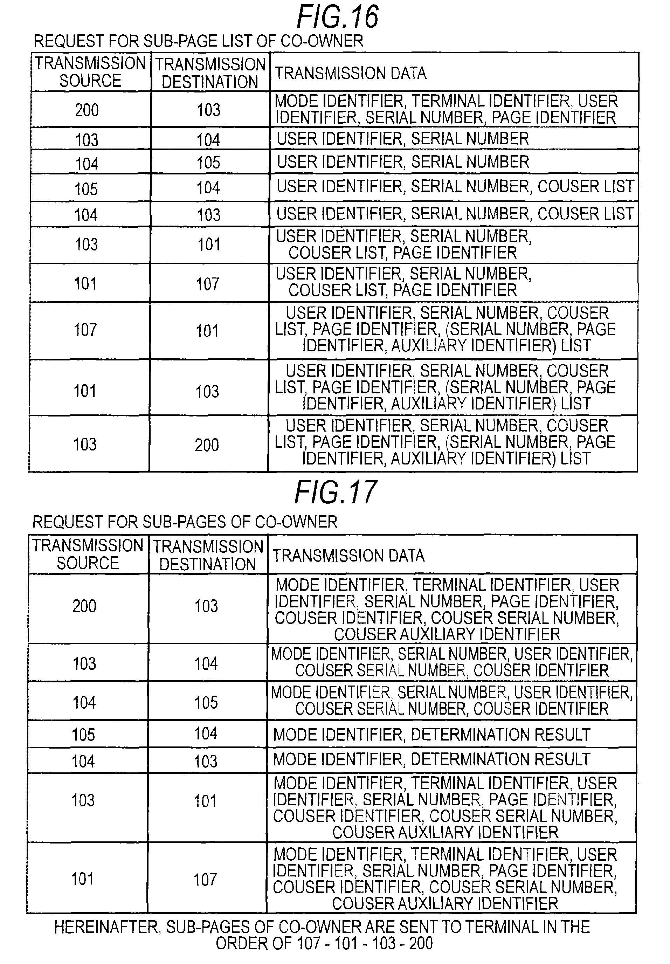

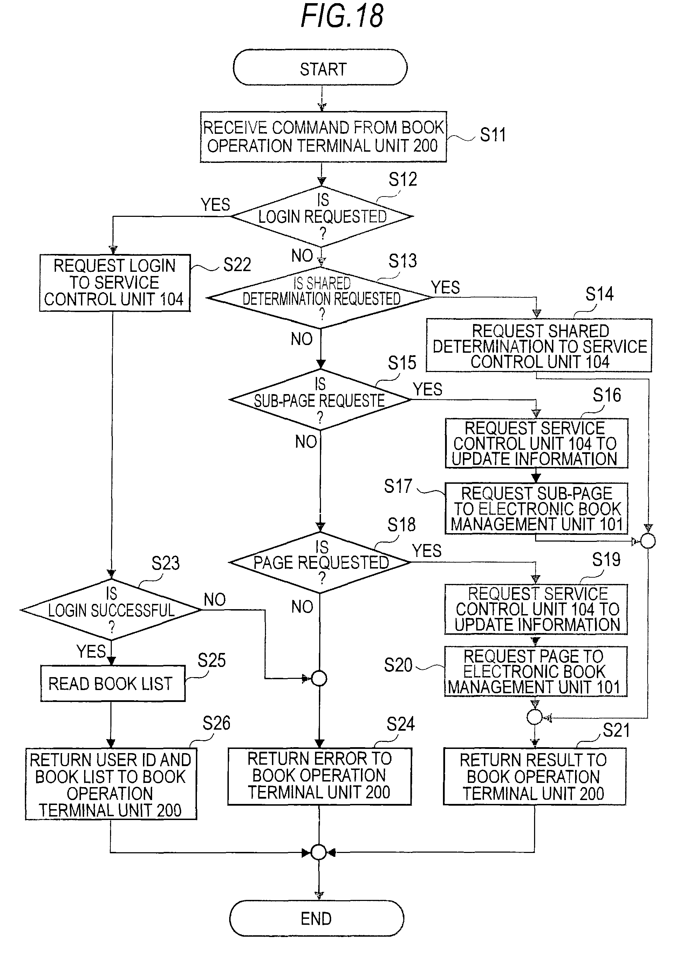

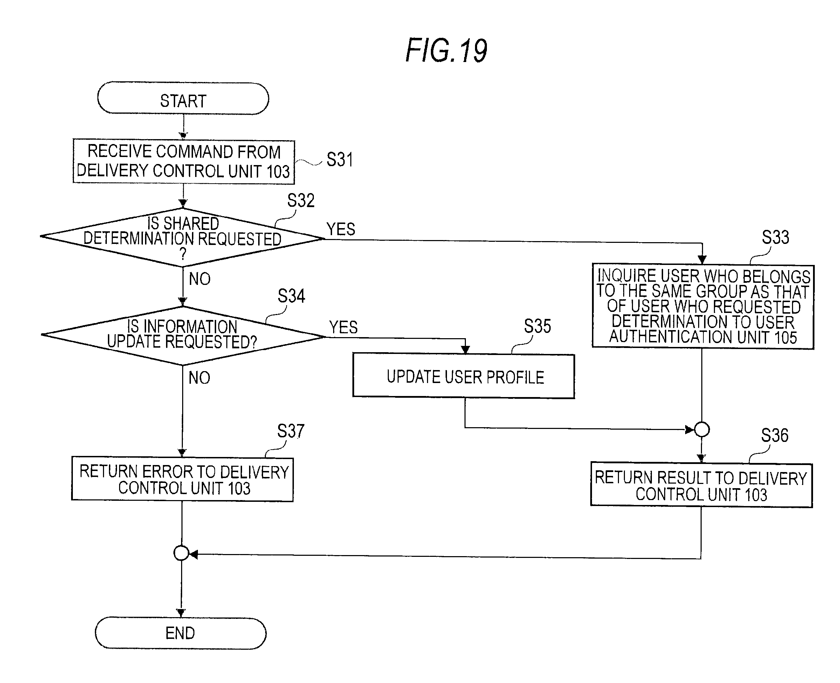

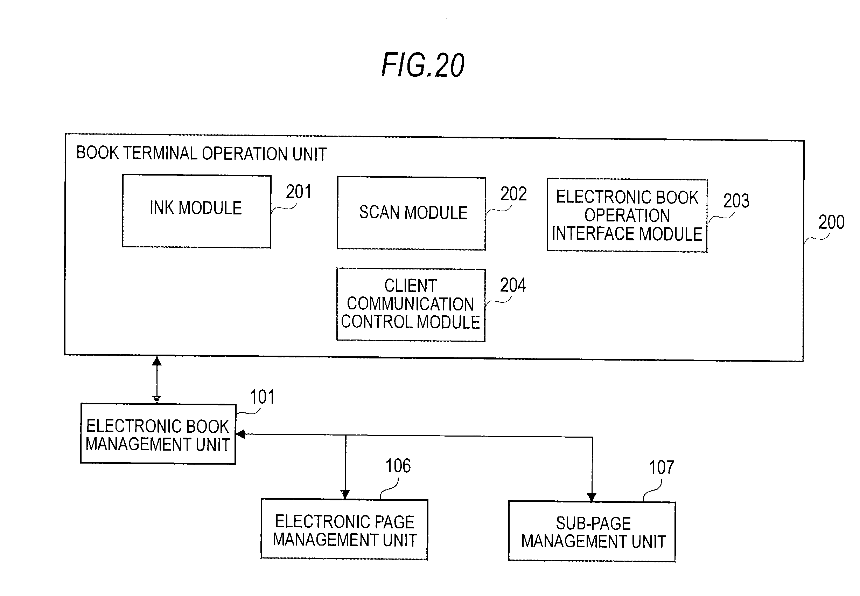

{Fig. 1} A view illustrates a basic configuration of an embodiment of the invention.
{Fig. 2} A view illustrates a storage unit in the embodiment of the invention.
{Fig. 3} A view illustrates a management method of an electronic book in the embodiment of the invention.
{Fig. 4} A view illustrates a logic structure for sharing a sub-book in the embodiment of the invention.
{Fig. 5} A view illustrates an identifier in the embodiment of the invention.
{Fig. 6} A view illustrates an original electronic book according to the embodiment of the invention.
{Fig. 7} A view illustrates original electronic book information according to the embodiment of the invention.
{Fig. 8} A view illustrates an electronic book according to the embodiment of the invention.
{Fig. 9} A view illustrates an electronic page according to the embodiment of the invention.
{Fig. 10} A view illustrates a sub-page according to the embodiment of the invention.
{Fig. 11} A view illustrates user data according to the embodiment of the invention.
{Fig. 12} A view illustrates shared data according to the embodiment of the invention.
{Fig. 13} A view illustrates a group attribute according to the embodiment of the invention.
{Fig. 14} A view illustrates information transmitted at the time of a login process in the embodiment of the invention.
{Fig. 15} A view illustrates information transmitted at the time of a page turning process in the embodiment of the invention.
{Fig. 16} A view illustrates information transmitted at the time a co-owner requests a sub-page list in the embodiment of the invention.
{Fig. 17} A view illustrates information transmitted at the time the co-owner requests a sub-page in the embodiment of the invention.
{Fig. 18} A flowchart (1/2) illustrates a basic operation of the embodiment of the invention.
{Fig. 19} A flowchart (2/2) illustrates the basic operation of the embodiment of the invention.
{Fig. 20} A view illustrates a modification of a basic configuration of the embodiment of the invention.

### {Reference Sings List}

101 electronic book management unit
103 delivery control unit
104 service control unit
105 user authentication unit
105-1, 106-1, 107-1 storage unit
106 electronic page management unit
107 sub-page management unit
200 book terminal operation unit
201 ink module
202 scan module
203 electronic book operation interface module
204 client communication control module

### {Description of Embodiments}

Next, an embodiment of the invention will be explained in detail using drawings. Referring to Fig. 1, the embodiment of the invention has an electronic book management unit 101, an electronic page management unit 106, a sub-page management unit 107, a service control unit 104, and a user authentication unit 105. Further, the embodiment has a delivery control unit 103 for interfering between the respective units and a book terminal operation unit 200.

Further, referring to Fig. 2, each of the user authentication unit 105, the electronic page management unit 106, and the sub-page management unit 107 has a storage unit under the control thereof. The user authentication unit 105, the electronic page management unit 106, and the sub-page management unit 107 store various information managed thereby in the storage units under the control thereof and make use of the various information. Note that although Fig. 2 conceptually shows three storage units 105-1, 106-1, and 107-1 as the storage units, the three storage units may be disposed on a same storage device.

The electronic book management unit 101 has a function for integrally managing the electronic page management unit 106 and the sub-page management unit 107. The electronic page management unit 106 has a function for keeping and managing accompanying page attributes such as page contents of respective electronic pages of an electronic book, an access history, and the like. Further, the sub-page management unit 107 has a function for keeping and managing a sub-page attribute composed of sub-page contents and a history of a sub-page related to an electronic page in the electronic page management unit 106, a creator, a kind of a gesture recognition result, a contents description position in a sub-page, and the like.

In the embodiment, a screen display page image of digital book data is captured by some kind of an digitizing means for converting the screen display page images to electronic analog image data. Note that, any optional standard such as PDF (Portable Document Format), flash image, a bit map image (bitmap image/bitmap graphics) can be selected to the conversion. Further, a paper book may be scanned and captured as an image of PDF, a flash image, a bit map image, and the like instead of converting electronic data. As a method of scan, it is considered to scan data by, for example, capturing a data image by a camera.

Further, the electronic page management unit 106 creates electronic pages with order by putting the captured electronic analog image data in order. Then, an original electronic book is created as a set of the created electronic pages with order. Further, the electronic page management unit 106 gives an identifier for discriminating an order of each page to the created original electronic book and further gives an attribute for writing various information to the created original electronic book and stores and manages the created original electronic book as a personal book. In the embodiment, plural electronic books can be stored and managed. Then, the electronic page management unit 106 gives a serial number to each of the electronic books to discriminate them and stores and manages the electronic books.

The sub-page management unit 107 creates and gives relating sub-pages to the respective electronic pages. Further, the sub-page management unit 107 gives an auxiliary identifier and other attribute to each of the electronic sub-pages and stores and manages the auxiliary identifier and the other attribute. Specifically, each electronic sub-page can be identified as a personal sub-book by a user ID, a serial number of an electronic book, an identifier of an electronic page, and an auxiliary identifier of an electronic sub-page.

Further, the sub-page management unit 107 can store and manage an electronic sub-page independent of an electronic book by collecting a set of sub-pages having the same serial numbers by an identifier or by an identifier and a user identifier described in an attribute of an electronic sub-page.

The electronic book/the personal book are specified by a serial number corresponding to an identifier of an original electronic book and a user ID of a user who browses them. Further, an electronic page identifier delivered to a terminal is kept to the electronic book as a state attribute, and a value of electronic page identifier is updated and managed in collaboration with the delivery control unit 103.

The electronic book management unit 101 sends data of designated electronic page and electronic sub-page to the book operation terminal unit 200 under a management and instruction of the delivery control unit 103 based on information of the service control unit 104. Further, the electronic book management unit 101 receives a command for creating and erasing an electronic sub-page transmitted from the book terminal operation unit 200 via the delivery control unit 103. The electronic book management unit 101 controls the received command by transmitting an instruction to the electronic page management unit 106 and the sub-page management unit 107 so that the received command is reflected to a predetermined electronic book, a personal book, a personal sub-book.

Further, the delivery control unit 103 receives a page request that is sent by the book operation terminal unit 200 and includes at least a serial number and a page identifier. The delivery control unit 103 which has received the page request controls the electronic book management unit 101 so that the electronic book management unit 101 instructs to transmit the requested electronic page and an electronic sub-page accompanying to the electronic page and, at the same time, transmits the contents of the instruction to the service control unit 104.

The user authentication unit 105 has a user profile such as an electronic book browsing right, an intention for sharing a sub-page, a cooperative learning membership, and the like of a user and authenticates an access and presents information to the service control unit 104. The user authentication unit 105 keeps an access history of various electronic books of a user under a user ID while making a list of electronic pages, identifiers, and electronic sub-page identifiers every serial number and stores and keeps personal information including a sharing attribute using a set of serial numbers as a value as a profile. Further, when the user authentication unit 105 receives a notification for updating information from the service control unit 104, the user authentication unit 105 updates a necessary profile based on the update information and further presents information in response to a request of various information designated by a user ID from the service control unit 104. The request for the various information includes a request for transmitting information in a profile executed by designating a user ID and a request for transmitting an electronic book access history executed by designating a user ID and a serial number. Further, the request for the various information includes shared determination information for collecting user IDs of users which include a serial number as a sharing attribute and making a list of the user IDs of the users when a serial number is included in the sharing attribute under a user ID, and otherwise for returning φ by designating a user ID, a serial number, and an identifier. At the time, the list of the user IDs to be sent can be filtered and selected using a profile as a parameter.

When a result of the filtering is φ, β which means that a list for satisfying a condition is not available, is returned. In the filtering, information in a profile such as an interested category of a reading and a rank of a past result of a person when the person learns something is used. Then, a filtering function for selecting a user ID of other user whose interested category is close to the interested category of the designated ID and a user ID of other user whose rate of a result is equal to or higher than the designate user is permitted. With the configuration, it is possible to present information, which is estimated hopeful to a user who needs it in information of the shared sub-page to the selection.

The delivery control unit 103 and the service control unit 104 under the control thereof receive a sharing request composed of a user 1D, a serial number, and an identifier transmitted from the book terminal operation unit 200 and request it to the user authentication management unit 105 as a shared determination request. When a return value to the request is neither φ nor β, the delivery control unit 103 and the service control unit 104 send a page sharing request to the electronic book management unit 101 using a result of the shared determination request as a parameter and receives a list of a serial number, a page identifier, and a sub-page auxiliary identifier as a set of values as a result of the page sharing request. The list is returned to the book operation terminal operation unit 200.

The service control unit 104 executes an access management to an electronic book and electronic pages and sub-pages of the electronic book in collaboration with the user authentication unit 105. The service control unit 104 keeps a maximum K pairs of an electronic page identifier and a sub-page auxiliary identifier as a list every serial number, that is, every personal book to keep an access status of each user to each electronic book. Further, the service control unit 104 updates a serial number and an identifier of an electronic page based on a request for an electronic page and an electronic sub-page transmitted from the delivery control unit 103 and, at the same time, notifies the user authentication unit 105 of the update. In the update executed by the service control unit 104, identifiers are erased from those having a smaller number by a LIFO (Last In, First out) manner so that a number of the identifiers does not exceed K.

Further, the book operation terminal unit 200 may send identifiers of electronic pages and electronic sub-pages per all the serial number. Further, the delivery control unit 103 may be able to request to transmit the identifiers of all the electronic pages and the auxiliary identifiers of all the electronic sub-pages which are kept by a terminal per serial number to the book operation terminal unit 200.

Next, the book terminal operation unit 200 will be explained.

The book terminal operation unit 200 has an ink module 201, a scan module 202, an electronic book operation interface module 203, and a client communication control module 204.

The book terminal operation unit 200 has a function for executing a page operation of an electronic book on a terminal having a screen with a touch function. The screen with the touch function is a screen having an input device and a display device in combination. The screen with the touch function is generally called by a name of, for example, a touch panel, a touch screen or a touch display. Further, although the embodiment assumes the terminal having the screen with the touch function, this does not restrict a range to which the embodiment is applied. The embodiment can be applied to any optional equipment, for example, a PC (Personal computer) and a PDA (Personal Digital Assistant).

The ink module 201 has a function for capturing ink data input on a screen, on which a page of an electronic book is displayed, by a pen and a touch and storing the ink data in an application and displaying the ink data on the screen as it is. That is, the ink module 201 has a function for inserting external paper data.

The scan module 202 has a function for capturing data scanned by a camera provided with the terminal or an external camera, storing the captured data therein, and, at the same time, displaying the captured data on the screen.

The operation interface module 203 is a module for operating a book and has a function for receiving the input by the touch and the pen and turning a page of an electronic book displayed on the screen based on the input backward and forward. The client communication control module 204 has a function for making a communication of an electronic page in collaboration with the delivery control unit 103. Further, the client communication control module 204 has a function for realizing a notification of a browsing status of an electronic book in collaboration with the service control unit 104.

The embodiment has the configuration described above. The embodiment makes it possible to practically use various types of book interactions, which are linked to a page structure with an order of an electronic book, by oneself or to lend and borrow the book interactions between cooperative learning members. As a result, since persons registered as members of a reading circle and a cooperative learning can be discriminated, it can be promoted to share information only between peers having an intention of sharing the information. Further, when it is made possible, for example, for a teacher to provide a cooperative learning privilege of all the students under the charge of the teacher with a user profile of a cooperative membership, it becomes possible to support learning using interaction histories to respective electronic book pages of the students and pupils as a base.

Further, in the embodiment, when a book as a textbook, which is a personal intellectual action, is understood and read and, in particular, read to understand contents of the book, reference information is captured as a sub-page, kept and arranged, and obtained knowledge is arranged. For example, to record and arrange an understood course for assisting a repeated reading, the electronic book management unit 101, which permits to use a structure given by a set of pages with an order that is called reading target books as a framework of arrangement, is introduced. With the configuration, knowledge and insight arranged in a brain by proceeding to read a book can be pasted to a page of an electronic book which directly relates to the book, recorded, and arranged as a sub-page. Accordingly, each time a person visits a page again by himself or herself, the person can be reminded and can review the page, or in a certain case, the person can causes a fellow who reads the same page to practically use his or her sub-page, or, on the contrary, the person can borrow sub-page data remained on the same page by the fellow.

Further, in the embodiment, a function for adding and erasing an optional number of sub (auxiliary) pages is disposed to a structure composed of a page with an order of a book as a target of understanding, and the embodiment has the electronic book management unit 101 which records and manages a book interaction by causing the book interaction to correspond to the sub-page. With the configuration, the contents of a sub-page created and added to a page by oneself can be controlled so that the contents can be automatically reminded again only by opening the page. Further, when a question and a difficult to understand portion exist on the page, a footprint of understanding left by other study buddy to the page to which attention must be paid can be directly borrowed, by which understanding can be assisted. In addition to the above-mentioned, since the useful information is attached to a necessary page, the useful information has such a feature that a time for searching the useful information is not necessary and, at the same time, each person can obtain the useful information when necessary with saving a time necessary for asking somebody a question and without interrupting other person's action by asking the question.

Further, in the embodiment, a sub-page having the same size is created on a page displayed on the screen of the terminal for displaying and operating a page of an electronic book as a transparent virtual page which allows to execute direct writing by a pen. Further, a sub-page is created by pasting scan image data of a camera and the like on a virtual page. Further, a sub-page, in which a character inserted by a KB and the like is displayed on a transparent virtual page, is created. Further, the created sub-page and a current page can be superimpose-display, in the case in which only ink contents are pasted to a transparent sub-page, a sub-page composed of scan image data can be superimpose-displayed, and when base data is also pasted to a sub-page, the sub-page can be also individually displayed without superimposition as if an independent additional page exists.

Further, in the embodiment, a virtual page displayed on the terminal screen is caused to be accompanied to respective pages (hereinafter, appropriately called "base page") of an electronic book that is the base page and stored as a sub-page to thereby grow the electronic book under the management of the electronic book management unit 101. As a result, a book interaction with an electronic book as a reading action can be created and accumulated as a sub-page which is directly related to a page to which the action is executed and can be practically used thereafter. Accordingly, understanding can be supported by repeating a course of a reading progress and reminding a progress of understanding.

Further, in the embodiment, as to a page which is requested to be displayed by the book operation terminal unit 200, a sub-page which is related to the page is also read to the book operation terminal unit 200 under the management of the delivery control unit 103, superimposed to the page as a transparent virtual page, and displayed on the screen. In a sub-page to which scan data is copied, however, it is also possible to display the sub-page as a virtual page according to a display request and a designation of a display position without being superimpose-display.

That is, a virtual page may be separately created in the book operation terminal unit 200 in at least three types, i.e., a superimpose-display of ink data, a superimpose-display of digital character data, and a display of scan data depending on a type of input data. Further, a virtual page relating to a certain page may be provided with a function which allows a user to create any number of pages by some kind of a procedure on the book operation terminal unit 200. With the configuration, when data cannot be accommodated in single sheet of a virtual page, the data may be accommodated in a separate virtual page by requesting to create the separate virtual page. Further, displays such as a superimpose-display, a separate-position-designated display, and a requested-time display may be able to be selectively controlled depending on a type and a property of a virtual page.

Further, to reduce a risk of an illegal use and an abuse of electronic book contents, entire electronic book contents may not be kept on the book operation terminal unit 200 at the same time. For the purpose, it is considered to provide a configuration in which entire electronic book contents are stored externally of the book operation terminal unit 200, for example, on a server connected to a network and the delivery control unit 103 and the electronic book management unit 101 are disposed on the server. Then, the delivery control unit 103 on the server receives a request of a page and a sub-page of an electronic book from the book operation terminal unit 200 and returns a requested page and sub-page to the book operation terminal unit 200.

In addition to the above-mentioned, the delivery control unit 103 receives an instruction for erasing a virtual page and a specific virtual page which are created by the book operation terminal unit 200 accompanying to a page and superimpose-displayed and transmits addition, erasure, and update to an electronic book in the electronic book management unit 101 via the delivery control unit 103.

To progress a communication of the information without disturbance, the delivery control unit 103 is provided and the communication is monitored and controlled thereby. With the configuration, it becomes possible not to store an entire copy of an overall electronic book on the terminal and to possess a necessary page and a virtual page each time they are required. With the configuration, it becomes possible to erase an extra electronic page and virtual page and various information accompanying therewith from on the book operation terminal unit 200, not to possess them, to browse an electronic book by the book operation terminal unit 200, and to smoothly interact with an electronic book. Further, an electronic book can be browsed by a lot of users by disposing the electronic book management unit 101 on a network.

Next, two management methods of an electronic book in the embodiment will be shown referring to Fig. 3. As described above, the electronic book management unit 101 in the embodiment can add and erase an inserted page as a sub-page related to each page of an electronic book. The electronic book management unit 101 stores information and data in the electronic page management unit 106 and the sub-page management unit 107.

In this point, (a) on a left side of Fig. 3 illustrates such a configuration that a copy of an original electronic book is created for each user in the electronic page management unit 106 and stored and managed in the electronic page management unit 106. In (a), the sub-page management unit 107, in which sub-pages which are added to the respective electronic pages in the copy of the original electronic book by being caused to correspond thereto, are collected and stored, is linked. In contrast, in (b) illustrated on a right side of Fig. 3, an original electronic book is stored in the electronic book management unit 101, and the electronic page management unit 106 stores and manages only a page configuration and its attribute of the original electronic book. In (b), the page configuration and its attribute of the original electronic book are managed by being linked to the sub-page management unit 107.

The former configuration (a) is suitable to manage an electronic book, which is purchased without a connection to a network, by a terminal. In contrast, the latter configuration (b) is more suitable when the electronic book management unit 101 is disposed in a server on a network. The latter configuration (b) achieves an effect that a protection of contents and a safe management of an ownership of the contents can be easily executed by that a copy of an original electronic book not created.

Further, the embodiment has the service control unit 104 for making a mutual communication with the delivery control unit 103 in response to a request of the user for browsing an electronic book. The service control unit 104 authenticates an access authority and determines the contents of the authority based on a user profile in the user authentication unit 105, an access request from the delivery control unit 103, and a user ID and returns the authentication and the determination to the delivery control unit 103. With the operation, a safe access to an electronic book and a presentation of information to an authorized user can be realized, and thereby an electronic book can be used securely.

Further, the electronic book management unit 101 may be configured so as to be able to store plural different electronic books. For the purpose, plural browser users send a browsing request for browsing plural electronic books, which is composed of a user ID, an electronic book serial number, and an electronic page, to the electronic book management unit 101 from the book operation terminal unit 200. Subsequently, the delivery control unit 103 which has received the browsing request transmits the user ID and the electronic book serial number to the service control unit 104. Next, the service control unit 104 starts the user authentication unit 105 and obtains authentication information, and an authentication made by the service control unit 104 which has received the authentication information is returned to the delivery control unit 103.

Further, the user authentication unit 105 stores and keeps a diachronic attribute, a synchronic attribute, and an external attribute as a user profile, and not only an access to an electronic book is authenticated but also various information is presented to the delivery control unit 103 by the attributes. Exemplified as an example of the diachronic attribute are a serial number list of a shared electronic book by which it is expressed to desire to collaborate with other user via an electronic book and a category of a user's interest in reading. Further, exemplified as an example of the external attribute are proficiency, knowledge, and a learning level of a user (specifically, a score of a test and the like) relating to a field of study to which an electronic book of a serial number belongs.

When the sharing request composed of the user ID, the serial number, and the identifier is sent from the book operation terminal unit 200 to the delivery control unit 103, the delivery control unit 103 sends the user ID and the serial number to the user authentication unit 105 via the service control unit 104 to authenticate whether or not there is other user to whom the received sharing request is permitted. When there is other user who can share the serial number and an electronic book is shared with the other person, the user authentication unit 105 collects a list of user IDs of users which are expressed in profiles of the users and returns the list.

The delivery control unit 103 transmits a list user IDs to which the share is permitted and serial numbers and electronic page identifiers of electronic books to electronic book management unit 101, and the electronic book management unit 101 returns a set of the electronic sub-pages according to a received request. The delivery control unit 103 which has received the set of the electronic sub-pages returns it to the book terminal operation unit 200. Note that, as to a specific user ID, the electronic book management unit 101 may be able to set so that the user ID can share (access to) all the electronic books when the user ID is authenticated to the user authentication unit 105. With the setting, it becomes possible to guarantee a necessary delivery control right by a monitor user.

Next, the delivery control unit 103 and the electronic book management unit 101 will be explained referring to Fig. 4 and Figs. 5 to 13.

First, Fig. 5 explains an identifier relating to an original electronic book (the contents), an electronic page, and a sub-page.

Figs. 6 to 10 explain management data relating to the original electronic book (the contents), the electronic page, and the sub-page, and accompanying attributes. Further, sharing of the sub-page of a browser user who accesses to the original electronic book (the contents), the electronic page, the sub-page, and the like is described and kept in a profile under the management of the user authentication unit 105 by a serial number of an electronic block, a group number, and a user identifier (ID) as shown in Fig. 11 as to an identifier of the user, as shown in Fig. 12 as to information shared between users, and as shown in Fig. 13 as to a definition attribute of a group. Further, its combination is defined by a theoretical structure of sharing of a sub-book as illustrated in Fig. 4.

The delivery control unit 103 manages a connection from a terminal and a page request, and, for the purpose, integrally controls the service control unit 104, which is in charge of an access authentication and a control, and the electronic book management unit 101 which manages a request process relating to an electronic book and its page and sub-page.

In the embodiment, when a user understands the contents and proceeds to read the contents, the electronic book management unit 101 binds a book interaction to an electronic page being displayed to an electronic page in the electronic book and keeps the electronic book as an electronic personal sub-book. Further, the service control unit 104 receives a sharing request including the user ID, the serial number, and the electronic page identifier from the book operation terminal unit 200. Further, the service control unit 104 sends a sharing enable/disable request including the user ID and the serial number to the user authentication unit 105 and returns a sharing-permission user ID list for permitting to share (an intention for sharing) an electronic book designated by the serial number the service control unit 104, otherwise φ is returned.

The delivery control unit 103 sends a request for an electronic sub-page relating to an electronic page designated by the sharing request to the electronic book management unit 101 from an electronic personal sub-book of the user ID in the sharing-permission user ID list, receives a result of the request, and sends a reply to the book operation terminal unit 200.

It is possible for the book operation terminal unit 200 to display a signal for notifying an arrival (existence) of the received electronic sub-page on the screen and the user to display the shared electronic sub-page and to capture (borrow) the shared sub-page as a sub-page of the user.

A value showing whether the user only displays the shared sub-page or captures the shared sub-page by borrowing it, a sub-page identifier of the shared sub-page, a page identifier of the shared sub-page, an electronic book serial number, and a user ID can be sent to the delivery control unit 103 as a feedback reflection request to the electronic book management unit.

The electronic book management unit 101, which has received the feedback reflection request via the delivery control unit 103, first, gives a user ID, when a result of the sharing is borrowed to the sub-page of an original owner user and referred to (viewed) while the feedback reflection request is being executed, and a value of display/borrowing as attributes. In addition to the above-mentioned, the borrowed sub-page, in which an original owner ID is added to a personal sub-book of a borrower user as an attribute, is created and added. A feedback regarding to whom the addition and the giving have been useful by executing them by the electronic book management unit 101 can be kept, which can contribute to strengthen an incentive of giving information.

The service control unit 104 can receive information of a new page request, which is issued from the book operation terminal unit 200, from the delivery control unit 103 and keep the information therein so that the identifiers of the electronic page and the electronic sub-page that are temporarily kept in the book operation terminal unit 200 can be displayed at the time of an operation designated by the user ID and the electronic book serial number. Further, it is made possible to manage the delivery control unit 103 and the book operation terminal unit 200 by keeping control information when it is not desired to provide the book operation terminal unit 200 with extra book contents therein.

Further, in the embodiment, the original electronic book and the electronic personal sub-book or the electronic personal book is stored and managed on the server. When a terminal device is connected to the network and used for the browsing, a protected storage buffer region, in which a predetermined number K of electronic pages and electronic sub-pages relating to the electronic pages are stored, may be provided on the terminal side and pages b in front of and behind a page being displayed at a time T may be provided in a communication between the server and the terminal. In, for example, a case in which two electronic pages are displayed in a spread, a buffer capable of storing a range of, for example, 2 + 2b = range K is provided. It is preferable to configure the storage buffer region on a non-volatile memory to provide a delivery function for downloading (DL) a new electronic page and electronic sub-page requested by an identifier of an electronic page each time reading is proceeded on an electronic terminal mechanism. Further, a delivery control mechanism, which records and keeps a page that is being browsed at the time or has been downloaded (DL) to the terminal in each electronic personal (sub) book, is provided on the server. The terminal side is managed so that a download is promoted and a predetermined number of electronic pages and electronic sub-pages accompanying to the electronic pages a (b > a) are downloaded (DL). With the management, the delivery control mechanism can be combined with a service management means capable of smoothing a delivery to a lot of terminals connected to each other by using the network.

In the embodiment, an electronic sub-page of an electronic personal (sub) book created by the book interaction is created and stored by being associated with an original electronic page of the electronic book, and a set of electronic sub-pages accompanying to the original electronic page can be specified via an identifier of the original electronic page. On the contrary, an existence of an electronic sub-page accompanying to an electronic page of an identifier of other user can be known by designating an identifier of an electronic page. In addition to the above-mentioned, it is possible to download (DL) the electronic sub-page to the terminal and to display and operate the electronic sub-page similar to one's own sub-page by a terminal application. Further, it is possible for the terminal application to register a sub-page of other person to an electronic personal (sub) book as one's own sub-page and to give a new attribute (owner user identification name, and the like) which shows that the sub-page is a product of the other person, when necessary. Further, a fact that the electronic sub-page has been browsed by other person (information showing that the electronic sub-page has been browsed and an identification name of a user who have accessed it) or a fact that the electronic sub-page has been captured (the fact of the capture and an identification name of a user who has captured it, and the like) can be stored as an attribute accompanying to the electronic sub-page of the electronic personal (sub) book.

Further, a service control mechanism may monitor each electronic personal (sub) book and may periodically obtain a status of display and browsing executed by a user via a terminal unit or may obtain status information by accessing to the delivery control mechanism when a browsing is requested from the terminal mechanism. When it is requested to display an electronic sub-page of a designated electronic page by notifying an existence of the electronic sub-page of the designated electronic page to the terminal mechanism or issuing some kind of a signal to a user by an application on the terminal mechanism, it is possible to transmit the designated electronic sub-page (group) to the terminal and to display it appropriately by a terminal application.

### {Explanation of Operation of the Embodiment}

Next, an operation of the embodiment will be explained referring to Figs. 14 - 17 and flowcharts of Figs. 18 and 19.

First, Figs. 14 - 17 illustrate information transmitted between respective procedures. Note that, in Figs. 14 - 17, an illustration of names of the respective units illustrated in Fig. 1 is omitted, and respective units acting as a transmission source or a transmission destination are specified using a symbol.

Note that, to explain the respective views, Fig. 14 is a view illustrating information transmitted at the time of a login process. Fig. 15 is a view illustrating information transmitted at the time of a page turning process. Fig. 16 is a view illustrating information transmitted at the time a co-owner requests a sub-page list. Fig. 17 is a view illustrating information transmitted at the time a co-owner requests a sub-page. Next, a basic operation of the delivery control unit 103 in the embodiment will be explained referring to the flowchart of Fig. 18. Fig. 18 is a flowchart illustrating a series of operations for discriminating a login request process, a sharing request process, and a page request process from a terminal, sending a process request to respective related units, and sending a reply in response to a request from the terminal. Referring to Fig. 18, first, the delivery control unit 103 receives some kind of a command from the book operation terminal unit 200 (step S11). Next, the delivery control unit 103 confirms whether or not the received command is a login request (step S12). When the received command is the login request (YES in step S12), a process proceeds to step S22. In contrast, when the received command is not the login request (NO in step S12), the process proceeds to step S 13.

Subsequently, in step S 13, the delivery control unit 103 confirms whether or not the command is a shared determination request (step S13). When the command is not the shared determination request (NO in step S13), the process proceeds to step S 15. In contrast, when the command is the shared determination request (YES in step S 13), the process proceeds to step S 14.

In step S14, the delivery control unit 103 makes the shared determination request to the service control unit 104, and the process proceeds to step S21.

In step S 15, the delivery control unit 103 confirms whether or not the command is a sub-page request (step S 15). When the command is not the sub-page request (NO in step S 15), the process proceeds to step S18. In contrast, when the command is the sub-page request (YES in step S15), process proceeds to step S16.

In step S16, the delivery control unit 103 makes an information update request to the service control unit 104 (step S16). Subsequently, the delivery control unit 103 makes a sub-page request to the electronic book management unit 101 in step S 17. Then, the process proceeds to step S21.

In step S18, the delivery control unit 103 confirms whether or not the command is a page request (step S18). When the command does not the page request (NO in step S18), the process proceeds to step S24. In contrast, when the command is the page request, (YES in step S18), the process proceeds to step S 19.

In step S 19, the delivery control unit 103 makes the information update request to the service control unit 104 (step S 19). Subsequently, in step S20, the delivery control unit 103 makes a page request to the electronic book management unit 101. Then, the process proceeds to step S21.

In step S21, the delivery control unit 103 returns results of the requests in step S14, step S 17 or step S20 to the book operation terminal unit 200 and finishes the operation. In step S22, the delivery control unit 103 makes the login request to the service control unit 104. Subsequently, the delivery control unit 103 confirms whether or not a login is successful (step S23). When the login is not successful (NO in step S12), the process proceeds to step S24. In step S24, the delivery control unit 103 returns an error to the book terminal operation unit 200 and finishes the operation.

In contrast, when the login is successful (YES in step S23), in step S25, the delivery control unit 103 reads a book list (step S25). Subsequently, the delivery control unit 103 returns a user ID and the book list to the book operation terminal unit 200 and finishes the operation (step S26).

Next, a basic operation of the service control unit 104 in the embodiment will be explained referring to a flowchart of Fig. 19. Fig. 19 is a flowchart illustrating a series of operations for receiving the various requests illustrated in Figs. 14 - 17 via the delivery control unit 103, checking the various requests with a user profile and the like, updating the contents of the various requests, and returning a result to the delivery control unit 103. Referring to Fig. 19, first, the service control unit 104 receives a command from the delivery control unit 103 (step S11).

Next, the service control unit 104 confirms whether or not the received command is the shared determination request (step S32). When the received command is not the shared determination request (NO in step S32), the process proceeds to step S34. In contrast, when the received command is the shared determination request (YES in step S32), the process proceeds to step S33.

In step S33, the service control unit 104 inquires a user who belongs to the same group as that of a user of a request source who has requested the determination to the user authentication unit 105. Thereafter, the process proceeds to an operation in step S36. In step S34, the service control unit 104 confirms whether or not the received command is the information update request (step S34). When the received command is not the information update request (NO in step S34), the process proceeds to step S37. In contrast, when the received command is the information update request (YES in step S34), the process proceeds to step S35.

In step S35, the service control unit 104 updates the user profile (step S35).

After the operation in step S33 or step S35 is finished, the service control unit 104 proceeds to step S36. In step S36, the service control unit 104 returns a result of the operation in step S33 or step S35 to the delivery control unit 103. The operation is finished thereby.

In step S37, the service control unit 104 returns an error to the delivery control unit 103. The operation is finished thereby.

Next, an configuration of a modification of the embodiment of the invention will be explained in detail referring to Fig. 2.

In an embodiment illustrated in Fig. 20, a book operation terminal unit 200 and an electronic book management unit 101 are directly connected to each other and physically realized as a single terminal different from the embodiment illustrated in Fig. 1. With the configuration, it becomes possible for a user who owns electronic book contents to store and keep a book interaction captured by the book operation terminal unit 210 in an electronic page management unit 106 and a sub-page management unit 107 of the electronic book management unit 101 and to send and receive the book interaction to and from a book operation terminal unit under the management of the electronic book management unit 101. As a result, the modification has a feature in that browsing, careful reading, and repeated reading can be executed even in an off-line state in which the book operation terminal unit 210 is not connected to a network and that a response of its operation can be optimized by deriving a calculating/reading performance of a terminal device to the utmost extent.

Note that although the service provision system that is the embodiment of the invention can be realized by hardware, the service provision system can be also realized by reading a program, which causes a computer to function as the service provision system, by the computer from a recording medium that can be read by the computer and executing the program.

Further, although the service provision method for electronic documents by the embodiment of the invention can be realized by hardware, the service provision method for electronic documents can be also realized by causing a computer to read a program, which causes the computer to execute the method, from a recording medium that can be read by the computer and executing the program.

Further, the embodiment has been explained assuming that the program specific to the embodiment is previously stored in the service provision system for electronic documents. However, a computer may be operated as an entirety or a part of the service provision system or program for electronic documents, which executes the process described above, may be stored in a recording medium such as a flexible disc, a CD-ROM (Compact Disc Read-only Memory), a DVD (Digital versatile Disc), an MO (Magneto optical Disk (Disc)), a BD (Blu-ray Disc), and the like which can be read by a computer and delivered, may be installed on another computer, and may be operated as the means described above or may be caused to execute the steps described above.

Further, although the embodiment described above is a preferable embodiment of the invention, the scope of the invention is not limited only to the embodiment, and the invention can be executed in an embodiment which is variously modified in a scope that does not depart from a gist of the invention.

The embodiment of the invention explained above achieves a lot of effects as described below.

A first effect resides in that a memo and a method of using the memo can be largely expanded.

This is because, although it is restricted by a size and a constitution of a paper sheet that many visitors make a memo on a paper sheet as to a paper book, in the embodiment, an optional number of virtual transparent memo pages can be created as to a relevant page and the virtual transparent memo pages can be displayed by being overlapped with the contents of the page underneath.

A second effect resides in that a review and a practical use of useful information can be assisted significantly. In general, when respective visitors read a paper book, although they make notes on an obtained book or notes independent of the obtained book, and collect and arrange information for understanding the contents of the book, an amount of information which can be kept and managed by being inserted to a paper book is physically restricted. As a result, a way of practically using useful information collected at great pains afterward is narrowed because the information is dissipated or it is given up to directly and effectively arrange the information by insertion for inserting a paper relating to a relevant page to a location of the relevant page. However, according to the embodiment, the review and the practical use of the useful information can be assisted significantly.

This is because information captured by scanning data recorded on an external paper sheet can be captured to a relevant electronic book and managed without being dissipated.

A third effect resides in that understood contents and knowledge can be remained and arranged by making use of a display of an original page of an electronic book as if the display is a personal blackboard.

A reason of the above-mentioned will be explained. In general, a memo directly written on a book page has a problem in that the memo cannot be erased and that since the memo is written on a contents (document) surface or on a space between lines, the memo makes it difficult to read contents of an original page. In the embodiment, however, ink (excluding base data of a book itself) data of a memo, and ink data of characters captured by being scanned is managed by creating a page, i.e., a transparent virtual page other than a current page. Accordingly, when it becomes difficult to read an original page and a transparent virtual page at the time they are displayed by being overlapped, a superimposing display can be selected and a miswritten memo and a memo including mistaken contents can be simply discarded together with a virtual page. Accordingly, the embodiment achieves the third effect described above.

A fourth effect will be explained. According to the embodiment, all the memos and scan data can be created as another virtual page (sub-page) by being linked to a relevant page in an electronic book to which they relate and can be stored and managed. Thus, when a certain page is read again to understand contents of the certain page, the stored memo and scanned data can be referred to by, for example, superimpose-displaying data of a sub-page, which is written in his or her way, without any trouble. With the operation, the embodiment achieves, as the fourth effect, an effect that a troublesome job for searching information becomes unnecessary and an effect that a visitor is not confused by information which is not related to a relevant page to which the visitor makes a great effort to correctly read and understand the page at the time.

A fifth effect will be explained. Recently, it is said that a learning effect is improved as compared with a personal learning by presenting a cooperative learning on a network, issuing a question to a shared electronic space, and making writing by a cooperative learner who found the question. However, unless a learner joins a community of the cooperative learning and pays attention thereto at all times to a certain extent, the learner cannot obtain information and cannot be guaranteed to obtain a solution presented by correctly understanding a question and a problem. Further, an action for issuing a question and a job of a member of the cooperative community who expressly replies to a question become a cause of stress and thus becomes an obstacle when a cooperative incentive of good quality is presented. In the point, the embodiment can achieve an effect for reducing disagreement of an intention and information background between coworkers and a possibility of deteriorating a joint incentive caused by that irrelevant information is shared by accelerating a cooperation by sharing information using a textbook and a book as a nucleus.

A sixth effect will be explained. According to the embodiment, shared information is a memo, insertion, and an underline mark of an important portion which is applied to an original page by each person and directly relate to contents of the page. In the embodiment, when a coworker opens a certain page of the same electronic book, the coworker can refer to the shared information as a sub-page to the same page created by other person when necessary and can capture the shared information as a sub-page of an electronic book of the coworker. Accordingly, there is achieved an effect that it is not necessary to search the shared information and a coworker whose shared information, which has been created at his or her own pace, is referred to need not to create the shared information in response to a request or by being forced and, thus reading and learning are not interfered.

A seventh effect will be explained. According to the embodiment, when users, who browse and make use of the same electronic book, share a sub-page which is created by a user in association with a page, the shared contents of the sub-page are various information registered to a user profile and delivered and controlled so as to be filtered. As a specific example, a test result of a curriculum may be included in the profile or a field interested in reading may be included in the profile. When a corresponding sub-page created by other person is shared/referred to by a page number of a specific page, a delivery control mechanism can deliver only a sub-page of a person whose result of a test of a curriculum of a textbook is ranked in an upper level. Further, it is possible to preferentially deliver a sub-page of a person who is interested in a field of books to be browsed and to preferentially deliver a sub-page of a person whose test result of a curriculum is ranked in a low level to a super user such as a teacher. As described above, since information which seems to be more desired by a person who needs the information is autonomously selected and delivered, there is achieved an effect that an incentive for permitting sharing and usefulness of making use of the information are increased.

An eighth effect resides to make it more easily to install a contents protection technology and to lower a barrier for obtaining an agreement of a copyright holder to this type of an electronic book.

This is because a personal book and a personal sub-book can be created and kept by preventing contents of an electronic book from being copied and borrowing only a page structure of the electronic book. Further, this is because a book terminal is provided with a mechanism for permitting to buffer only contents data of a predetermined number of pages so that contents data whose buffer size is excessive is automatically erased from the terminal (automatically overwritten).

A ninth effect resides in that even in a state in which a book terminal is not connected to a network, a page of an electronic book stored on a network can be used safely and efficiently. Then, an off-line reading becomes possible in a reading style such as when proceeding reading in, for example, a sequence of pages at the time a textbook is understood.

This is because a buffer of a predetermined number of pages disposed in a terminal is secured in a region of a non-volatile memory, connected to a network, and automatically delivered and managed so that k sheets of pages in front of and behind a page being displayed at a time t can be kept.

A tenth effect resides in that an electronic book of the invention can coexist with a format for expressing and keeping the contents of a page of a rapidly-advancing digital book and with a space of a knowledge resource, i.e., a web which is already open. Further, in collaboration with the coexistence, an individual personal can expand a field in which he or she collects and arranges knowledge and can increase an efficiency of the collection, and thereby the individual personal can enlarge a way of getting various enjoyments by borrowing an electronic book. A reason will be described below.

A structure of an electronic book according to the embodiment creates a sub-page which is overlapped to (linked to) the contents of an original page of an original book. Thus, the structure of the electronic book neither changes nor modifies the contents of the original page at all. Further, an operation of the electronic book by a user is realized on electronic terminals, for example, on various PCs, various terminal PDAs (Personal Digital Assistants) and Smart Phones by a book operation unit on the terminals. Accordingly, in the embodiment, the PC and the terminal are configured to keep and to operate a Web browser, i.e., a browser (book viewer) for "a digital book which is defined by a digital hyper structure and multimedia data" and which will be developed hereafter. Accordingly, the original electronic book can be played back and displayed by starting a video replay in a page of an electronic book or clicking URL. The configuration can coexist with the electronic book of the invention without adversely affecting the structure of the electronic book. Further, there can be obtained a synergistic effect that can grow a personal sub-book by the embodiment by pasting optional URL (web page) from contents displayed by the WEB browser to an one's own sub-page by operating a mouse.

An eleventh effect resides in that the invention is preferable to a use for directly supporting a proofreading process when a book is written electronically.

This is because troublesomeness of information management up to a final correcting action can be reduced by reflecting and keeping not only a browsing of a completed electronic book but also a repeated proofreading to a draft, a proofreading of the same page by plural persons, and, in particular, a collaborative proofreading whose management becomes troublesome when papers are used therefor, in contrast with the corrections being reflected and kept in an independent sub-page.

The application is based on Japanese Patent Application No. 2010-152917 (filed on July 5, 2010) and claims the priority under the Paris Convention. The contents disclosed in Japanese Patent Application No. 2010-152917 are cited in the description referring to Japanese Patent Application No. 2010-152917.

Although a typical embodiment of the invention has been described in detail, it must be understood that various changes, substitutions, and alternatives are executed without departing from the spirit and scope of the invention defined in the claims. Further, the inventors intend that even if any claim is corrected in an application procedure, the scope of equivalent of the claimed invention is maintained.

Although a part or the entirety of the embodiment may be also described as shown in appendixes, the embodiment is not limited to the appendixes.

(Appendix 1) A service provision system for electronic documents that includes a terminal device including a display unit and a server device mutually communicating with the terminal device, wherein the server device includes:
an electronic page management unit for giving a page identifier to each of digitized electronic pages of an electronic book including the electronic pages and managing the electronic book as an original electronic book;
a sub-page management unit for creating an optional number of electronic sub-pages that are pages corresponding to the electronic pages, giving an auxiliary identifier to each of the electronic sub-pages, and creating and managing an electronic personal sub-book including the electronic sub-pages for each of users who have created the electronic sub-pages; and
an electronic book management unit for managing the page identifier and the auxiliary identifier by causing the page identifier to correspond to the auxiliary identifier, and the terminal device includes:
   a book terminal operation unit for receiving an operation from the user and adding data according to the operation of the user to the electronic sub-page as interaction data; wherein
   the book terminal operation unit causes the display unit to display the original electronic book and the electronic personal sub-book in response to a request of a user received by the book terminal operation unit.

(Appendix 2) The service provision system according to appendix 1, wherein the original electronic book is copied for each of the users, data in which the copied original electronic book and the electronic personal sub-book are combined is managed as an electronic personal book, and the display unit is caused to display the electronic personal book in response to a request of the user.

(Appendix 3) The service provision system according to appendix 1, wherein a number of pages which can be kept by the terminal device at the same time is limited to a predetermined number of pages and any one or both of the electronic pages and the electronic sub-pages are downloaded so as to fall within the number of the predetermined pages and displayed by the display unit.

(Appendix 4) The service provision system according to any one of appendixes 1 to 3, wherein
transparent virtual pages are created as the electronic sub-pages; and data, which is the interaction data and displayed on backgrounds by being superimposed thereon using the electronic pages acting as the backgrounds, is pasted to the transparent virtual pages while keeping a positional correspondence to the electronic pages acting as the backgrounds, and the transparent virtual pages and the electronic pages acting as the backgrounds are superimposed and displayed on the display unit.

(Appendix 5) The service provision system according to any one of appendixes 1 to 4, wherein
transparent virtual pages are created as the electronic sub-pages; and data, which is the interaction data and displayed independent of the electronic pages, is pasted to the transparent virtual pages, and the transparent virtual pages and the electronic pages are displayed on the display unit, respectively.

(Appendix 6) The service provision system according to any one of appendixes 1 to 5, wherein a plurality of users who share the same original electronic book are managed as a group, and a user who belongs to the group can browse the electronic sub-pages created based on an operation of other users who belong to the group.

(Appendix 7) The service provision system according to appendix 6, wherein a plurality of users who share the same original electronic book are managed as a group, and a user who belongs to the group can download the electronic sub-pages created based on an operation of other users who belong to the group and can edit the downloaded electronic sub-pages as electronic sub-pages of the user himself or herself who has downloaded the electronic sub-pages.

(Appendix 8) The service provision system according to appendix 7, wherein when the other user browses or downloads the electronic sub-pages, an identifier for identifying the other user and a fact that the electronic sub-pages have been browsed or downloaded are recorded by being associated with the electronic sub-pages.

(Appendix 9) An service provision terminal device for electronic documents that includes a display unit includes:
an electronic page management unit for giving a page identifier to each of digitized electronic pages of an electronic book including the electronic pages and managing the electronic book as an original electronic book;
a sub-page management unit for creating an optional number of electronic sub-pages that are pages corresponding to the electronic pages, giving a auxiliary identifier to each of the electronic sub-pages, and creating and managing an electronic personal sub-book including the electronic sub-pages for each of users who have created the electronic sub-pages;
an electronic book management unit for managing the page identifier and the auxiliary identifier by causing the page identifier to correspond to the auxiliary identifier; and
a book terminal operation unit for receiving an operation from the user and adding data according to the operation of the user to the electronic sub-page as interaction data, wherein
the original electronic book and the electronic personal sub-book are displayed on the display unit in response to a request of a user received by the book terminal operation unit.

(Appendix 10) A service provision method for electronic documents, the method being executed by a system that includes a terminal device including a display unit and a server device mutually communicating with the terminal device, wherein
the server device gives a page identifier to each of digitized electronic pages of an electronic book including the electronic pages and manages the electronic book as an original electronic book;
the server device creates an optional number of electronic sub-pages that are pages corresponding to the electronic pages, gives an auxiliary identifier to each of the electronic sub-pages, and creates and manages an electronic personal sub-book including the electronic sub-pages for each of users who have created the electronic sub-pages;
the server device manages the page identifier and the auxiliary identifier by causing the page identifier to correspond to the auxiliary identifier;
the terminal device receives an operation from the user and adds data according to the operation of the user to the electronic sub-page as interaction data; and
the book terminal operation unit causes the display unit to display the original electronic book and the electronic personal sub-book in response to the request received from the user.

(Appendix 11) A service provision program for electronic documents, the program being installed on a service provision terminal device for electronic documents that includes a display unit, the terminal device further including:
an electronic page management unit for giving a page identifier to each of digitized electronic pages of an electronic book including the electronic pages and managing the electronic book as an original electronic book;
a sub-page management unit for creating an optional number of electronic sub-pages that are pages corresponding to the electronic pages, giving an auxiliary identifier to each of the electronic sub-pages, and creating and managing an electronic personal sub-book including the electronic sub-pages for each of users who have created the electronic sub-pages;
an electronic book management unit for managing the page identifier and the auxiliary identifier by causing the page identifier to correspond to the auxiliary identifier; and a book terminal operation unit for receiving an operation from the user and adding data according to the operation of the user to the electronic sub-page as interaction data, wherein
the program causes a computer to function as a service provision terminal for electronic documents for causing the display unit to display the original electronic book and the electronic personal sub-book in response to a request of a user received by the book terminal operation unit.

### {Industrial Applicability}

The invention is preferable to various uses as shown below. Exemplified as the preferable uses are browsing of contents such as a practical use, a creation, cooperative practical use, and cooperative creation of an electronic book, an electronic document, and an electronic booklet, proofreading and a check via browsing, a record of these actions and further putting physical paper data and notes, which coexist with the electronic book, document, and electronic booklet, in order and managing the physical paper data and the notes to integrate the electronic book, the electronic document, and the electronic booklet with the physical paper data and the notes. Further, the invention can be applied to a platform, which is composed of a terminal function and a server function for carefully reading a book, browsing and understanding a textbook and a specialized book, and browsing and creating an in-house document for business use by a function for supporting and promoting a practical use of a document which requires an indirect collaborative communication using an electronic page as a pivot. Further, the invention can be also applied to provide a platform for supporting a personal and electrical writing and a cooperative writing of the electronic book and document.

## Claims

1. A service provision system for electronic documents, comprising: a terminal device comprising a display unit; and a server device mutually communicating with the terminal device, wherein
the server device comprises:
an electronic page management unit for giving a page identifier to each of digitized electronic pages of an electronic book comprising the electronic pages and managing the electronic book as an original electronic book;
a sub-page management unit for creating an optional number of electronic sub-pages that are pages corresponding to the electronic pages, giving an auxiliary identifier to each of the electronic sub-pages, and creating and
managing an electronic personal sub-book comprising the electronic sub-pages for each of users who have created the electronic sub-pages; and
an electronic book management unit for managing the page identifier and the auxiliary identifier by causing the page identifier to correspond to the auxiliary identifier, and
the terminal device comprises:
a book terminal operation unit for receiving an operation from the user and adding data according to the operation of the user to the electronic sub-page as interaction data; wherein
the terminal device displays on the display unit the original electronic book and the electronic personal sub-book in response to a request of a user received by the book terminal operation unit.

2. The service provision system according to claim 1, wherein the original electronic book is copied for each of the users, data in which the copied original electronic book and the electronic personal sub-book are combined is managed as an electronic personal book, and the display unit is caused to display the electronic personal book in response to a request of the user.

3. The service provision system according to claim 1, wherein a number of pages which can be kept by the terminal device at the same time is limited to a predetermined number of pages and any one or both of the electronic pages and the electronic sub-pages are downloaded so as to fall within the number of the predetermined pages and displayed by the display unit.

4. The service provision system according to any one of claims 1 to 3, wherein transparent virtual pages are created as the electronic sub-pages; and data, which is the interaction data and displayed on backgrounds by being superimposed thereon using the electronic pages acting as the backgrounds, is pasted to the transparent virtual pages while keeping a positional correspondence to the electronic pages acting as the backgrounds, and the transparent virtual pages and the electronic pages acting as the backgrounds are superimposed and displayed on the display unit.

5. The service provision system according to any one of claims 1 to 4, wherein transparent virtual pages are created as the electronic sub-pages; and data, which is the interaction data and displayed independent of the electronic pages, is pasted to the transparent virtual pages, and the transparent virtual pages and the electronic pages are displayed on the display unit, respectively.

6. The service provision system according to any one of claims 1 to 5, wherein a plurality of users who share the same original electronic book are managed as a group, and a user who belongs to the group can browse the electronic sub-pages created based on an operation of other users who belong to the group.

7. The service provision system according to claim 6, wherein a plurality of users who share the same original electronic book are managed as a group, and a user who belongs to the group can download the electronic sub-pages created based on an operation of other users who belong to the group and can edit the downloaded electronic sub-pages as electronic sub-pages of the user himself or herself who has downloaded the electronic sub-pages.

8. The service provision system according to claim 7, wherein when the other user browses or downloads the electronic sub-pages, an identifier for identifying the other user and a fact that the electronic sub-pages have been browsed or downloaded are recorded by being related to the electronic sub-pages.

9. A service provision terminal device for electronic documents, comprising a display unit, the service provision terminal device comprising:
an electronic page management unit for giving a page identifier to each of digitized electronic pages of an electronic book comprising the electronic pages and managing the electronic book as an original electronic book;
a sub-page management unit for creating an optional number of electronic sub-pages that are pages corresponding to the electronic pages, giving an auxiliary identifier to each of the electronic sub-pages, and creating and managing an electronic personal sub-book comprising the electronic sub-pages for each of users who have created the electronic sub-pages;
an electronic book management unit for managing the page identifier and the auxiliary identifier by causing the page identifier to correspond to the auxiliary identifier; and
a book terminal operation unit for receiving an operation from the user and adding data according to the operation of the user to the electronic sub-page as interaction data, wherein
the original electronic book and the electronic personal sub-book are displayed on the display unit in response to a request of a user received by the book terminal operation unit.

10. A service provision method for electronic documents, the method being executed by a system that comprises a terminal device comprising a display unit and a server device mutually communicating with the terminal device, the method comprising:
the server device giving a page identifier to each of digitized electronic pages of an electronic book comprising the electronic pages, and managing the electronic book as an original electronic book;
the server device creating an optional number of electronic sub-pages that are pages corresponding to the electronic pages, giving an auxiliary identifier to each of the electronic sub-pages, and creating and managing an electronic personal sub-book comprising the electronic sub-pages for each of users who have created the electronic sub-pages;
the server device managing the page identifier and the auxiliary identifier by causing the page identifier to correspond to the auxiliary identifier;
the terminal device receiving an operation from the user and adding data according to the operation of the user to the electronic sub-page as interaction data; and
the terminal device displaying on the display unit the original electronic book and the electronic personal sub-book in response to the request received from the user.
